# EUROPÄISCHE PATENTSCHRIFT

(11) **EP 2 394 843 B1**
(45) Veröffentlichungstag und Bekanntmachung des Hinweises auf die Patenterteilung: **08.10.2014**
(21) Anmeldenummer: 11168453.6
(22) Anmeldetag: 01.06.2011
(51) Int. Cl.: B60N 2/50, B60N 2/52

(54) **Pneumatisches Federungssystem für Fahrzeuge und Verfahren zum pneumatischen Federn von Fahrzeugteilen**
Pneumatic suspension system for vehicles and method for pneumatic suspension of vehicle sections
Système de suspension pneumatique pour véhicules et procédé d'amortissement pneumatique de pièces de véhicules

(30) Priorität: 08.06.2010 DE 102010022959
(43) Veröffentlichungstag der Anmeldung: 14.12.2011
(73) Patentinhaber: GRAMMER AG, 92224 Amberg (DE)
(72) Erfinder: Haller, Erwin, 92262 Birgland (DE)
(74) Vertreter: Bittner, Bernhard

(56) Entgegenhaltungen:
- EP-A1- 1 468 870
- EP-A1- 1 724 131
- DE-A1- 2 849 700
- DE-A1-102005 051 228
- DE-A1-102008 050 192

## Beschreibung

Die Erfindung betrifft ein pneumatisches Federungssystem für Fahrzeuge mit mindestens einem ersten und einem zweiten Teil, wobei beide Teile mittels mindestens einer Luftfeder schwingungsbeweglich und pneumatisch federnd zueinander gelagert sind, gemäß dem Oberbegriff des Patentanspruches 1 und ein Verfahren zum pneumatischen Federn von Fahrzeugteilen gemäß dem Oberbegriff des Patentanspruches 10.

Pneumatische Federungssysteme für Fahrzeuge sowie Verfahren zum pneumatischen Federn von Fahrzeugteilen sind aus verschiedenen Bereichen eines Fahrzeuges bekannt. Pneumatische Federungssysteme werden insbesondere bei pneumatisch gefederten Fahrzeugsitzen, pneumatisch gefederten Fahrzeugkabinen und pneumatisch gefederten Fahrwerken von Fahrzeugen eingesetzt.

Diesbezüglich wird das Dokument EP 1 724 131 A1 als nächstliegender Stand der Technik betrachtet.

Insbesondere bei pneumatisch gefederten Fahrzeugsitzen ergibt sich häufig das Problem, dass konstruktionsbedingt und aufgrund des begrenzt zur Verfügung stehenden Einbauraumes innerhalb von Fahrzeugen nur begrenzt Restfederwege von Luftfedern, die zur federnden Lagerung zwischen Fahrzeugsitzoberteilen und Fahrzeugsitzunterteilen eingebaut werden, zur Verfügung stehen. Dies trifft insbesondere dann zu, wenn vorab eine etwas niedrigere Sitzposition des Fahrzeugsitzes eingestellt wird, da sich beispielsweise eine kleinere Person auf dem Sitz befindet, die ebenso als Fahrer mit ihren Füßen einen ständigen Kontakt zu den Brems- und Gaspedalen des Fahrzeuges haben muss. In diesem Fall ist beim Befahren eines sehr unebenen Fahrweges die Gefahr groß, dass bei einer Einleitung einer Schwingung von unten, also bei einem Überfahren einer Erhebung auf der Fahrbahn, die Luftfeder derart stark gestaucht bzw. komprimiert wird, dass sie an ihren Hubendanschlag gelangt, wobei dieses Erreichen des Hubendanschlages nicht nur für eine Luftfeder zutreffen kann, sondern für jedes weitere schwingungsbewegliche Element innerhalb des Fahrzeugsitzes, welches ebenso in eine Hubendlage, beispielsweise aufgrund des begrenzten Bauraums, gelangen kann.

Das Einstellen einer relativ stabilen Niveaulage des Fahrzeugsitzes wird in der Regel bei derartigen luftgefederten Fahrzeugsitzen mittels einer so genannten offenen Steuerung geregelt. Dies bedeutet, dass mittels einer Steuerung bei Einleitung einer Schwingung in das Federungssystem entweder Druckluft in das Federungssystem und damit in die Luftfeder zugeführt oder aus diesem/dieser abgeführt wird. Beispielsweise wird bei einem starken Zusammendrücken der Luftfeder aufgrund einer starken Einleitung einer Schwingungsbewegung beim Überfahren einer Fahrbahnerhebung Luft zugeführt, wohingegen bei einem Auseinanderziehen der Luftfeder während einer starken Einleitung einer Schwingung aufgrund des Durchfahrens einer Mulde in der Fahrbahn Luft aus der Luftfeder abgeführt wird.

Wenn nun im Federungssystem und damit der Luftfeder bei der Einleitung starker Schwingungsbewegungen ein nur geringer Federweg zum Ausgleich der Schwingungsbewegung zur Verfügung steht, besteht die Gefahr des Berührens des Hubendanschlags, welches für den Fahrer sehr schmerzhaft sein kann. Als Gegenmaßnahme werden häufig zusätzlich angeordnete hydraulische Dämpfer derart verstellt, dass sie eine harte Dämpfung aufweisen, um der Schwingungsbewegung entgegenzuwirken. Dies hat zur Folge, dass zwar die Hubendanschläge bzw. Hubendlagen nicht erreicht werden, jedoch auch eine schwache Abdämpfung der eingeleiteten Schwingungsbewegungen in dem Federungssystem und damit in dem Fahrzeugsitz für den Fahrer spürbar erfolgt.

Eine weitere bekannte entgegenwirkende Maßnahme ist die Verstellung des Fahrzeugsitzes in seiner Höhe, so dass das Federungssystem wieder in einer mittleren Position bezüglich des zur Verfügung stehenden Federweges angeordnet ist. Dies kann jedoch wiederum zur Folge haben, dass der Fahrer, wenn es sich um eine kleine Person handelt, nicht mehr das Fahrzeug zuverlässig bedienen kann, da Bremspedale, Kupplungspedale und dergleichen nicht mehr zuverlässig mit dem Fuß erreicht werden können.

Demzufolge liegt der vorliegenden Erfindung die Aufgabe zugrunde, ein pneumatisches Federungssystem für Fahrzeuge und ein Verfahren zum pneumatischen Federn von Fahrzeugteilen zur Verfügung zu stellen, bei dem trotz eines begrenzt zur Verfügung stehenden Restfederweges des Federungssystems und insbesondere einer zur pneumatischen Federung verwendeten Luftfeder eine in dem Fahrzeug sitzende Person einen hohen Sitzkomfort erfährt.

Diese Aufgabe wird vorrichtungsseitig durch die Merkmale des Patentanspruches 1 und verfahrensseitig durch die Merkmale des Patentanspruches 10 gelöst.

Ein wesentlicher Punkt der Erfindung liegt darin, dass bei einem pneumatischen Federungssystem für Fahrzeuge mit mindestens einem ersten und einem zweiten Teil, wobei beide Teile mittels mindestens einer Luftfeder schwingungsbeweglich und pneumatisch federnd zueinander gelagert sind und eine erste Regelungseinrichtung zum Zu- und Abführen von Luft in und aus der Luftfeder angeordnet ist, welche das Abführen von Luft durchführt, nachdem ein erster Hubendbereich des Federungssystems, bei dem sich die Luftfeder in einem gestauchten Zustand befindet, erreicht worden ist, und welche das Zuführen von Luft durchführt, nachdem ein zweiter Hubendbereich des Federungssystems, bei dem sich die Luftfeder in einem auseinandergezogenen Zustand befindet, erreicht worden ist, eine zweite Regelungseinrichtung zum Zuführen von Luft in die Luftfeder und zum Abschalten des Abführens von Luft in der Luftfeder während einer vorbestimmbaren ersten Zeitspanne angeordnet ist, nachdem erstmalig ein erster Hubendanschlag in dem ersten Hubendbereich erreicht worden ist. Zusätzlich oder alternativ kann eine dritte Regelungseinrichtung zum Abführen von Luft aus der Luftfeder und zum Abschalten des Zuführens von Luft in die Luftfeder während einer vorbestimmbaren zweiten Zeitspanne, nachdem erstmalig ein zweiter Hubendanschlag in dem zweiten Hubendbereich erreicht worden ist, angeordnet sein.

Mittels eines derartigen pneumatischen Federungssystems ist es erstmalig möglich, temporär, also für eine vorbestimmbare Zeitspanne, vorzugsweise für die Gesamtdauer von starken Einleitungen von Schwingungsbewegungen in das Federungssystem, die zur Verfügung stehenden Restfederwege bei Erreichen von Hubendanschlägen anzupassen. Denn eine derartige dynamische Federweganpassung für pneumatische Federungssysteme führt in einem Zustand der Luftfeder, in dem bisher das Abführen von Luft aus der Luftfeder zur Vermeidung eines Hubendanschlages der sich auseinanderbewegenden Luftfeder durchgeführt worden ist, die zweite Regelungseinrichtung, die separat oder integriert in der ersten Regelungseinrichtung ebenso wie die dritte Regelungseinrichtung angeordnet sein kann, Luft in die Luftfeder, wobei zugleich das bisher übliche Abführen von Luft aus der Luftfeder abgeschaltet wird. Dies geschieht lediglich während eines vorbestimmbaren Zeitraumes, also während der vorbestimmbaren ersten Zeitspanne, nachdem erstmalig der erste Hubendanschlag erreicht worden ist, um begrenzt auf diese erste Zeitspanne, während welcher die Einleitung von starken Schwingungsbewegungen stattfinden, eine Abdämpfung der Schwingungsbewegung des Federungssystems, in diesem Fall bei einer sich auseinanderbewegenden Luftfeder, zu erhalten. Dies trifft bei Fahrzeugsitzen dann zu, wenn der Fahrzeugsitz sich nach oben bewegt, also das Fahrzeugsitzoberteil sich gegenüber dem Fahrzeugsitzunterteil von diesem entfernt. Sobald diese Einleitung einer starken Schwingungsbewegung nachlässt und die vorbestimmbare Zeitspanne abgelaufen ist, findet wieder eine Rückkehr in den normalen Luftabführmodus statt und ein Zuführen der Luft in die Luftfeder wird während einer Nachobenbewegung des Fahrzeugsitzes nicht mehr durchgeführt.

Anders herum wird mittels der dritten Regelungseinrichtung bei einem Erreichen eines oberseitigen Hubendanschlages der Luftfeder anschließend Luft entnommen, anstatt Luft zuzuführen, wie es bei einem normalen Schwingungsverlauf ohne Einleitung starker Schwingungen der Fall wäre. Dies findet so lange statt, bis die vorbestimmbare zweite Zeitspanne abgelaufen ist. Während dieser zweiten Zeitspanne, also während der Einleitung starker Schwingungen für eine nach unten gerichtete Bewegung des Fahrzeugsitzes, die sich nach Erreichen des oberseitigen Hubendanschlages einstellt, und dann durchgeführt wird, wenn bei Erreichen des oberen Hubendanschlages eine Schwingung aufgrund des Durchfahrens einer stark ausgeprägten Mulde in der Fahrbahn eingeleitet wird, wird also entgegen den bisherigen Normalmodus nicht Luft zugeführt, wie es bei der Einleitung schwächerer Schwingungsbewegungen der Fall wäre, sondern es wird durch die dritte Regelungseinrichtung die Luft abgeführt, unmittelbar nachdem der Endanschlag erreicht worden ist. Dieses Abführen von Luft mittels der dritten Regelungseinrichtung während einer nach unten gerichteten Bewegung des Fahrzeugsitzes wird abwechselnd mit dem Zuführen von Luft durch die zweite Regelungseinrichtung während einer nach oben gerichteten Bewegung des Fahrzeugsitzes so lange durchgeführt, bis die jeweiligen ersten und zweiten Zeitspannen abgelaufen sind, deren Dauer sich danach richtet, wie lange die Einleitung der starken Schwingungsbewegungen stattfindet.

Vorzugsweise wird das Abschalten des Abführens von Luft während des Zuführens von Luft durch die zweite Regelungseinrichtung und die erste Regelungseinrichtung ebenso wie das Abschalten des Zuführens von Luft durch die erste Regelungseinrichtung während des Abführens von Luft durch die dritte Regelungseinrichtung und durch die erste Regelungseinrichtung von der Schwingungsfrequenz der schwingend zueinander beweglichen Teile gesteuert. Das heißt, sobald beispielsweise eine Schwingungsfrequenz des Federungssystems und damit der schwingend zueinander beweglichen Teile von mehr als 0,5 Hz auftritt, findet eine Abschaltung des Abführens der Luft nach Erreichen des unteren Hubendanschlages des Fahrzeugsitzes statt. Nach Erreichen des oberen Hubendanschlages hingegen wird ebenso ab einer bestimmten Schwingungsfrequenz von beispielsweise 0,5 Hz das Zuführen der Luft abgeschaltet. Die Folge daraus ist, dass sich nach Erreichen der Hubendanschläge die Restfederwege erhöhen und zwar so lange, bis keine Hubanschläge mehr berührt werden. Hieraus ergibt sich der für eine optimale Schwingungsbewegung des Federungssystems unter bestmöglicher Vermeidung des Erreichens der Hubendanschläge erforderliche Restfederweg.

Nach Erreichen des oberen Hubendanschlages des Fahrzeugsitzes, also einem Sichnachobenbewegen des Fahrzeugsitzes wird nicht, wie bei Erreichen des unteren Hubendanschlages, das Abführen der Luft abgeschaltet, sondern das Zuführen der Luft.

Selbstverständlich können die zweite oder dritte Regelungseinrichtung auch alleine, also ohne die dritte bzw. die zweite Regelungseinrichtung verwendet werden. Dies hat zur Folge, dass eine Restfederwegoptimierung lediglich nach Erreichen eines unteren Hubendanschlages oder nach Erreichen eines oberen Hubendanschlages erhalten wird.

Das Zurücksetzen in den normalen Schwingungsregelungsvorgang, in dem lediglich die erste Regelungseinrichtung, jedoch nicht direkt die zweite und dritte Regelungseinrichtung aktiv sind, kann wiederum von der Schwingungsfrequenz der schwingungsbeweglichen Teile abhängig gemacht werden. Vorzugsweise wird eine derartige Rücksetzfrequenz bei weniger als 0,8 Hz durchgeführt.

Gemäß einer bevorzugten Ausführungsform weist die zweite Regelungseinrichtung ein erstes Regelventil auf, vorzugsweise ein 2/2-Wege-Ventil, welches in einer Abluftleitung, die die Luftfeder mit der ersten Regelungseinrichtung verbindet, zum Ein- und Abschalten des Abführens von Luft aus der Luftfeder angeordnet ist. Ebenso kann die dritte Regelungseinrichtung ein zweites Regelventil, vorzugsweise ein 2/2-Wege-Ventil aufweisen, welches in einer Zuluftleitung, die die Luftfeder mit der ersten Regelungseinrichtung verbindet, zum Ein- und Abschalten des Zuführens von Luft in die Luftfeder angeordnet ist.

Gemäß einer bevorzugten Ausführungsform sind das zweite und das dritte Regelventil jeweils mittels mindestens einem beweglichen Element, das durch eines der schwingungsbeweglichen Elemente bewegbar ist, schaltbar.

Jedes bewegliche Element ist mit einem Bewegungsverzögerungsglied verbunden, um während der ersten bzw. zweiten Zeitspanne das bewegliche Element entgegen einer Federbeaufschlagungskraft verzögert in eine Ausgangsposition zurückzubewegen.

Gemäß einer Weiterbildung der Erfindung ist das bewegliche Element als Zahnstange ausgebildet und das Bewegungsverzögerungsglied als drehbares Zahnrad ausgebildet, welches mit der Zahnstange zusammenwirkt und mit einem vorbestimmbaren Drehmoment beaufschlagbar ist, wobei das Drehmoment von beispielsweise 10 Ncm nur in eine erste Drehrichtung des Zahnrades, bei der sich die Zahnstange von einer Auslenkposition in die Ausgangsposition bewegt, wirkt. Wird hingegen die Zahnstange von der Ausgangsposition in die Auslenkposition bewegt, wird ein Drehmoment von 0 Ncm angesetzt, so dass der Beginn der ersten und der zweiten Zeitspanne durch Bewegen bzw. Verschieben der Zahnstange und dem zeitgleichen Schalten bzw. Betätigen des ersten und/oder zweiten Regelventils unmittelbar nach Betätigen durch ein schwingungsbewegliches Teil, welches sich kurz vor dem Hubendanschlag des Federungssystems befindet, erfolgt.

Gemäß einer bevorzugten Ausführungsform führt eine Schwingungsfrequenzschalteinrichtung ab einer vorbestimmbaren Schwingungsfrequenz der schwingungsbeweglichen Teile das Abschalten des Abführens von Luft aus der Luftfeder zu Beginn der ersten Zeitspanne und das Abschalten des Zuführens von Luft in die Luftfeder zu Beginn der zweiten Zeitspanne durch.

Das erfindungsgemäße Federungssystem sowie das erfindungsgemäße Verfahren können beispielsweise auf Fahrzeugsitze angewendet werden, wobei das erste Teil ein Fahrzeugsitzoberteil und das zweite Teil ein Fahrzeugsitzunterteil ist. Alternativ kann es für Fahrzeugkabinen angewendet werden, wobei das erste Teil die Fahrzeugkabine an sich und das zweite Teil beispielsweise das Fahrzeuggrundgestell ist. Ebenso kann es auf Fahrwerke von Fahrzeugen angewendet werden, wobei der Fahrzeugrahmen das erste Teil und die Radaufhängung das zweite Teil darstellt.

Es wird ebenso gezeigt ein Verfahren zum pneumatischen Federn von Fahrzeugteilen mit mindestens einem ersten und einem zweiten Teil, wobei beide Teile mittels mindestens einer Luftfeder sich schwingend zueinander bewegen und pneumatisch federnd zueinander gelagert sind, wobei eine erste Regelungseinrichtung Luft in und aus der Luftfeder zu und abführt, welche das Abführen von Luft durchführt, nachdem ein erster Hubendbereich des Federungssystems, bei dem sich die Luftfeder in einem gestauchten Zustand befindet, erreicht worden ist, und welche das Zuführen von Luft durchführt, nachdem ein zweiter Hubendbereich des Federungssystems, bei dem sich die Luftfeder in einem auseinandergezogenenen Zustand befindet, erreicht worden ist,
wobei mittels einer zweiten Regelungseinrichtung Luft in die Luftfeder zugeführt wird und das Abführen von Luft aus der Luftfeder während einer vorbestimmbaren ersten Zeitspanne abgeschaltet wird, nachdem erstmalig ein erster Hubendanschlag in dem ersten Hubendbereich erreicht worden ist,
und/oder mittels einer dritten Regelungseinrichtung während einer vorbestimmbaren zweiten Zeitspanne Luft aus der Luftfeder abgeführt wird und das Zuführen von Luft in die Luftfeder abgeschaltet wird, nachdem erstmalig ein zweiter Hubendanschlag in dem zweiten Hubendbereich erreicht worden ist.

Weitere vorteilhafte Ausführungsformen ergeben sich aus den Unteransprüchen und der nachfolgenden Beschreibung in Verbindung mit der Zeichnung, wobei diese zeigen:
- Fig. 1: in einer schematischen Darstellung grundsätzlich die Funktion des erfindungsgemäßen pneumatischen Federungssystems gemäß einer Ausführungsform der Erfindung während einer normalen Schwingungsbewegung ohne Erreichen eines Hubendanschlages;
- Fig. 2: in einer schematischen Darstellung das pneumatische Federungssystem gemäß der Ausführungsform nach Erreichen eines unteren Hubendanschlages;
- Fig. 3: in einer schematischen Darstellung das erfindungsgemäße pneumatische Federungssystem gemäß der Ausführungsform der Erfindung nach Erreichen des oberen Hubendanschlages;
- Fig. 4: in einer schematischen Darstellung einen Fahrzeugsitz mit dem pneumatischen Federungssystem gemäß einer Ausführungsform der Erfindung; und
- Fig. 5: in einem Diagramm den Verlauf einer Schwingungsbewegung gemäß dem erfindungsgemäßen Verfahren, wie es durch das pneumatische Federungssystem durchgeführt werden kann, nach Erreichen eines unteren Hubendanschlages.

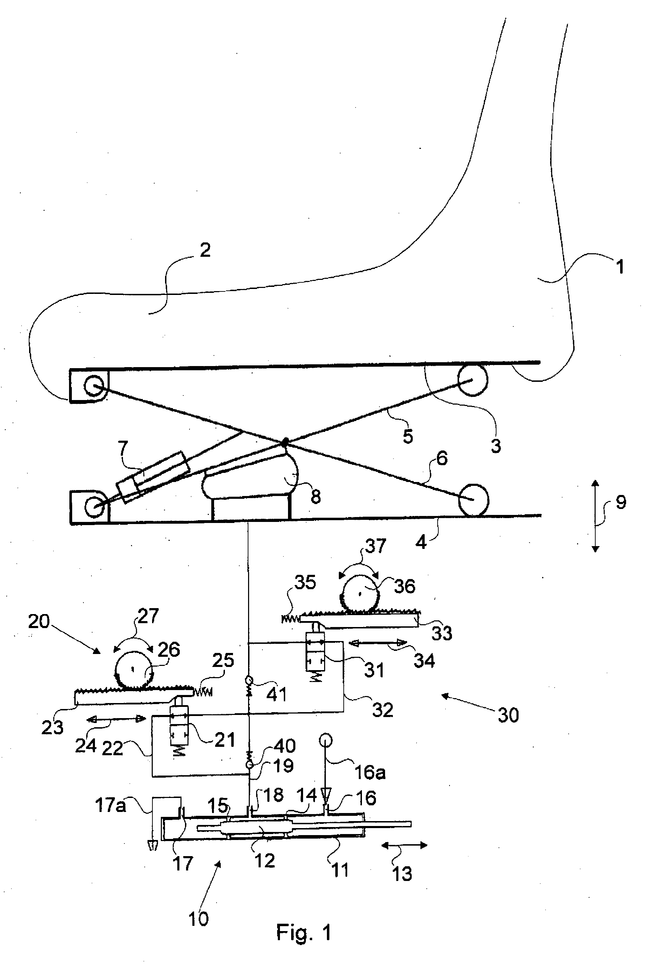

In Fig. 1 ist in einer schematischen Darstellung das Grundprinzip des pneumatischen Federungssystems anhand eines Fahrzeugsitzes dargestellt. Der Fahrzeugsitz weist eine Rückenlehne 1 und ein Polstersitzteil 2 auf, das auf einem oberen Fahrzeugsitzteil 3 angeordnet ist. Das Fahrzeugsitzteil 3 ist schwingend gegenüber einem unteren Fahrzeugsitzteil 4 pneumatisch gefedert gelagert und kann auf- und abwärts schwingen, wie es durch den Doppelpfeil 9 gezeigt wird.

Mittels eines Scherengestelles mit den Scherenarmen 5, 6 ist das obere Fahrzeugsitzteil 3 gegenüber dem unteren Fahrzeugsitzteil 4 beabstandet. Eine Luftfeder 8 ist zwischen dem Scherenarm 5 und dem unteren Fahrzeugsitzteil 4 angeordnet. Ein zusätzlicher Dämpfer 7 ist einerseits am unteren Fahrzeugsitzteil 4 und andererseits am Scherenarm 6 befestigt.

Eine erste Regelungseinrichtung 10 dient dazu, der Luftfeder 8 Luft zuzuführen und abzuführen. Die erste Regelungseinrichtung 10 besteht aus einem Gehäuse 11 mit einem darin angeordneten kolbenartigen Element 12, welches sich in Längsrichtung verschieben lässt, wie es durch den Doppelpfeil 13 dargestellt wird.

Das kolbenartige Element 12 ist von zwei voneinander beabstandeten Abdichtungselementen 14 und 15 umfasst und gegenüber dem Gehäuse abdichtend gelagert.

An einer Eingangsöffnung 16 wird Luft 16a zugeführt und an einem Ausgang 17 wird Luft 17a abgeführt.

Ein weiterer Ein- und Ausgang 18 dient zum Zu- und Abführen von Luft mittels der Leitung 19 zu und von der Luftfeder 8.

Je nachdem, wo das kolbenartige Element 12 gerade angeordnet ist, kann entweder Luft zugeführt werden, Luft abgeführt werden oder ein geschlossenes System ohne Luftzu- und Abführung eingestellt werden. Wird beispielsweise das kolbenartige Element 12 nach rechts verschoben, so kann über die Leitung 19 Luft aus der Luftfeder 8 in den Ein- und Ausgang 18 abgeleitet werden und über den Ausgang 17 entweichen. Wird hingegen das kolbenartige Element 12 nach links verschoben, so kann Luft 16a über den Eingang 16 an dem Abdichtungselement 14 vorbei über den Ein- und Ausgang 18 und die Leitung 19 in die Luftfeder 8 geleitet werden.

Eine zweite Regelungseinrichtung 20 weist im Wesentlichen ein 2/2-Regelventil 21 auf, welches innerhalb einer Abluftleitung 22 angeordnet ist. Durch Bewegen bzw. Verschieben einer Zahnstange 23, wie es durch den Doppelpfeil 24 gezeigt wird, wird das Regelventil 21 mittels des Absatzes in der Zahnstange 23 ausgelenkt und kann hierdurch die Abluftleitung 22 entweder unterbrechen oder auf Durchlass schalten.

Zusammenwirkend mit der Zahnstange 23 ist ein Zahnrad als Bewegungsverzögerungsglied, herkömmlicherweise als Honigmotor bekannt, mit dem Bezugszeichen 26 bezeichnet, verbunden. Dieses Zahnrad kann gemäß dem Doppelpfeil 27 nach links und rechts zeitgleich mit dem Verschieben der Zahnstange 23 bewegt werden, indem die Zähne der Zahnstange 23, welche in die Zähne des Zahnrades 26 eingreifen, das Zahnrad 26 verdrehen.

Ebenso ist eine dritte Regelungseinrichtung 30 ähnlich zu der zweiten Regelungseinrichtung aufgebaut. Wiederum ist ein Regelventil in Form eines 2/2-Regelventils 31 vorhanden, welches innerhalb einer Zuluftleitung 32 angeordnet ist, um diese zu unterbrechen oder durchzuschalten.

Auch eine Zahnstange 33, die entlang des Doppelpfeils 34 hin- und herverschoben werden kann und, ebenso wie die Zahnstange 23 mit der Feder 25, durch die Feder 35 federbeaufschlagt werden kann, sobald eine Verschiebung stattfindet, ist angeordnet. Die Zahnstange 33 wirkt wiederum mit einem Zahnrad 36 zusammen, welches als Zeitverzögerungsglied ausgebildet ist und entlang des Doppelpfeils 37 verdreht werden kann.

Sowohl das Zahnrad 26 als auch das Zahnrad 36 weisen ein Drehmoment von beispielsweise 10 Ncm auf, wenn das Zahnrad sich derart bewegt, dass die Zahnstange 23, 33 zurück in ihre Ausgangslage, also in Richtung Bildmitte, verschoben wird. Dem Drehmoment entgegen wirkt die Feder 25, 35, die durch Auslenkung der Zahnstange 23, 33 gespannt wird.

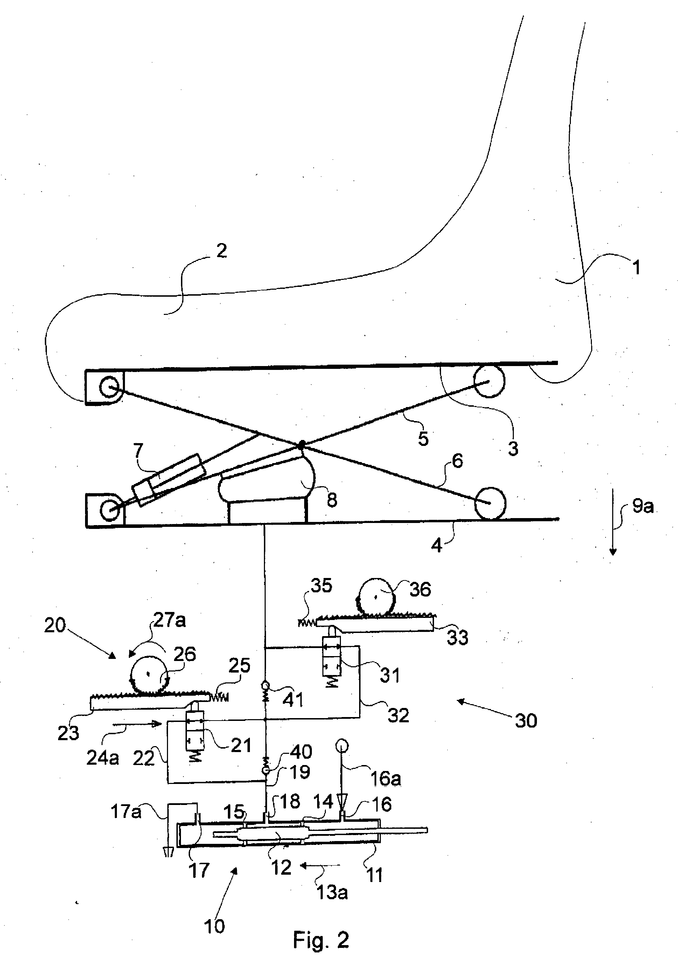

In Fig. 2 ist in einer schematischen Darstellung ebenso das Grundprinzip des erfindungsgemäßen pneumatischen Federungssystems gemäß einer Ausführungsform der Erfindung gezeigt, wobei diese Darstellung einen Zustand der Regelungseinrichtungen und des Fahrzeugsitzes darstellt, der nach erstmaligen Erreichen eines unteren Hubendanschlages eingenommen wird.

Gleiche und gleichbedeutende Teile sind mit gleichem Bezugszeichen versehen.

Dieser Darstellung ist zu entnehmen, dass der Fahrzeugsitz nach unten ausgelenkt ist, wie es durch die gestauchte bzw. zusammengedrückte Luftfeder 8 deutlich zu erkennen ist. Die Luftfeder 8 oder ein anderes Teil des Fahrzeugsitzes hat bereits einen Hubendanschlag erreicht, woraufhin kurz nach Erreichen des Hubendanschlages die zweite Regelungseinrichtung 20 aktiviert wird. Dies geschieht dadurch, dass die Zahnstange 23 bei Erreichen des Hubendanschlages ausgelenkt worden ist und sich in Richtung des Pfeils 24a bewegt hat. Hierdurch wird das Regelventil 21 ausgelenkt, welches eine Unterbrechung der Abluftleitung 22 zur Folge hat. Dies ist deutlich der Darstellung zu entnehmen.

Zugleich wird die Feder 25 aufgrund der Verschiebung der Zahnstange 23 gespannt.

Ebenso hat sich das Zahnrad 26 um seine Achse gedreht, und zwar in Richtung des Pfeils 27a.

Die dritte Regelungseinrichtung hingegen ist bisher unverändert.

In der ersten Regelungseinrichtung 10 ist nun das kolbenartige Element 12 nach links verschoben, so dass Luft 16a durch den Eingang 16 aus dem Ein- und Ausgang 18 ausströmen kann und über die Leitung 19 und das Ventil 40 sowie die Zuluftleitung 32 in die Luftfeder 8 einströmen kann. Somit ist in diesem Zustand - wie beabsichtigt - die Abluftleitung unterbrochen und die Zuluftleitung 32 durchgeschaltet.

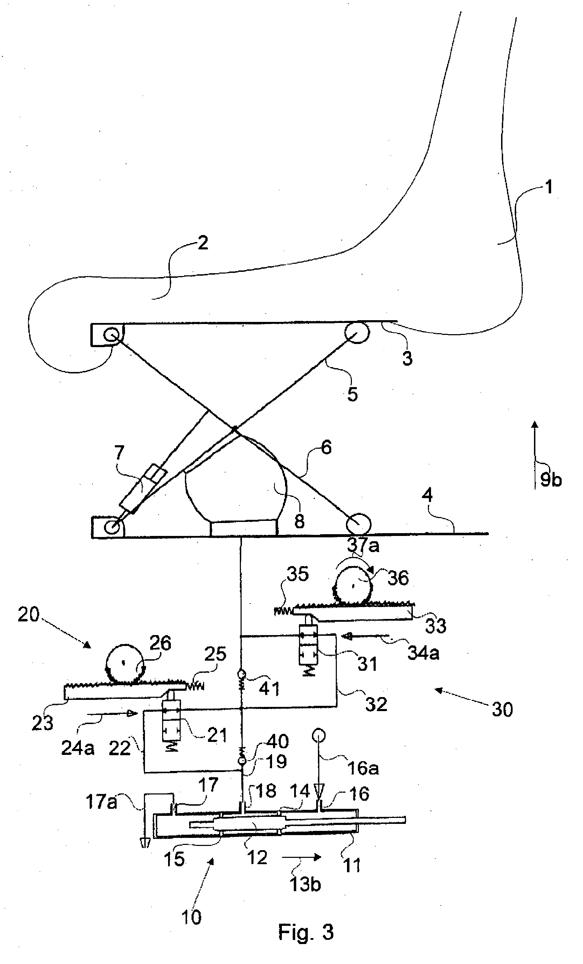

In Fig. 3 ist das Grundprinzip des erfindungsgemäßen pneumatischen Federungssystems mit dazugehörigem Fahrzeugsitz in einem weiteren Zustand nach Erreichen des oberen Hubendanschlages dargestellt. Gleiche und gleichbedeutende Teile sind mit gleichem Bezugszeichen versehen.

Dieser Darstellung ist zu entnehmen, dass nun die dritte Regelungseinrichtung 30 aktiviert worden ist, wohingegen die zweite Regelungseinrichtung 20 inaktiv ist, in dem die Zahnstange 23 nicht ausgelenkt ist. Die Zahnstange 33 hingegen ist entgegen der Spannkraft der Feder 35 ausgelenkt. Hierdurch ist das Regelventil 31 geschaltet worden und unterbricht somit die Luftzufuhrleitung 32, wie es der Darstellung deutlich zu entnehmen ist.

Der Pfeil 34a zeigt die Bewegung der Zahnstange für die Auslenkung, also für die Bewegung in eine Auslenkposition und der Pfeil 37a zeigt die Drehbewegung des Zahnrades 36, welche mit der Auslenkbewegung der Zahnstange 33 einhergeht.

Gleichzeitig ist in der ersten Regelungseinrichtung 10 das kolbenartige Element 12 nach rechts verschoben, wie es durch den Pfeil 13b dargestellt wird. Hierdurch kann Luft 17a über den Ausgang 17, den Ein- und Ausgang 18 und die Leitung 19 sowie die Abluftleitung 22 und das Rückschlagventil 41 entweichen.

Nach einer derartigen Auslenkung der Zahnstange 33 in Fig. 3 oder der Zahnstange 23 in Fig. 2 findet eine langsame rückwärtsgerichtete Bewegung der Zahnstange aufgrund der Federbeaufschlagung durch die Federkraft 35 bzw. 25 statt, wobei diese Bewegung deshalb langsam ist, da das honigmotorartige Element in Form des Zahnrades 26, 36 mit einem Drehmoment entgegenwirkt. Bei einer Auslenkung der Zahnstange 23, 33 in die entgegengesetzte Richtung hingegen, also aus der Ausgangsposition heraus in die Auslenkposition findet keine Drehmomentbeaufschlagung durch das Zahnrad 26, 36 statt.

Die Zeitspanne, innerhalb welcher der Honigmotor das Zurückkehren der Zahnstange 23, 33 in ihre Ausgangsposition und somit das Umschalten der Ventile 31, 21 in einen Durchschaltmodus zulässt, ist vorzugsweise zwischen 0 und 10 Sekunden einstellbar.

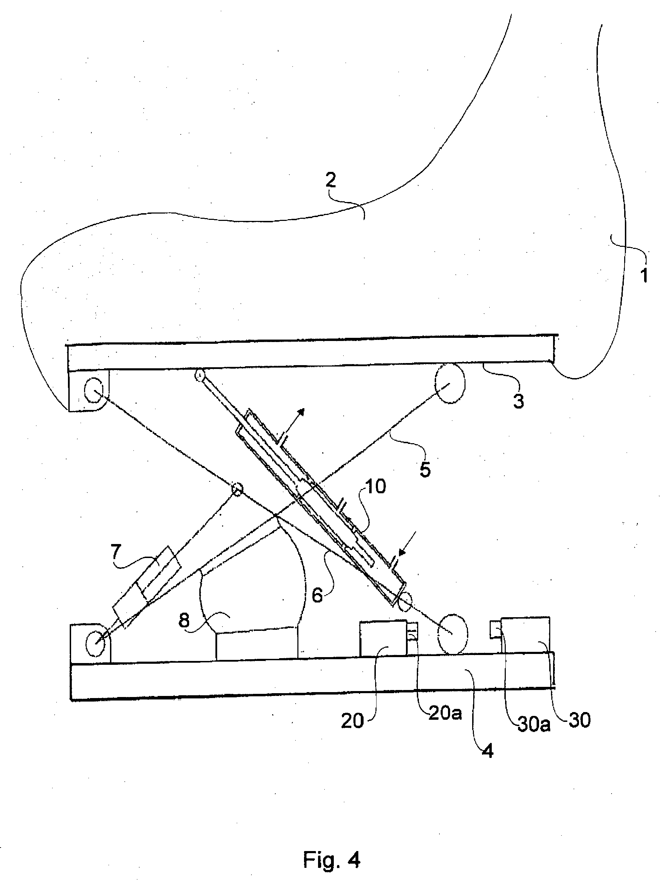

In Fig. 4 wird in einer schematischen Darstellung die Bauteile des erfindungsgemäßen Federsystems dargestellt. Gleiche und gleichbedeutende Teile sind mit gleichem Bezugszeichen versehen.

Dieser Darstellung ist deutlich zu entnehmen, dass die Positionierung der ersten Regelungseinrichtung 10 vorzugsweise zwischen oberen Fahrzeugsitzteil 3 und dem Scherenarm 6 geschieht. Ebenso ist dieser Darstellung zu entnehmen, dass die zweite und dritte Regelungseinrichtung 20 und 30 vorzugsweise in Form von separaten Bauteilen auch nachträglich anordbar sind, wobei diese Bauteile z. B. mit einem rollenartigen Element 6a, welches mit dem Scherenarm 6 verbunden ist, wechselwirken können, in dem das rollenartige Element 6a nach links oder nach rechts je nach Auslenkung des Scherenarmes und momentane Höheneinstellung des Fahrzeugsitzes gerollt wird.

Dieses rollenartige Element 6a wird bei einem vordefinierbaren Hubendanschlag in der zweiten Regelungseinrichtung 20 ein Betätigungselement 20a betätigen, welches mit der Zahnstange 23 wechselwirkt. Bei Erreichen eines unteren Hubendanschlages wird das rollenartige Element 6a mit einem Betätigungselement 30a der dritten Regelungseinrichtung wechselwirken, welches mit der Zahnstange 33 wechselwirkt.

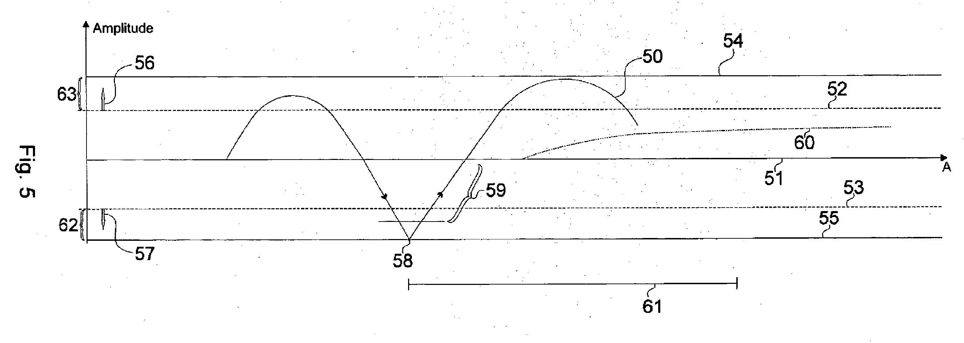

In Fig. 5 ist in einem Diagramm schematisch der Schwingungsverlauf des erfindungsgemäßen pneumatischen Federungssystems bei Erreichen eines unteren Hubendanschlages des Federungssystems dargestellt.

Dieser Zeichnung deutlich zu entnehmen, dass eine Schwingung 50, die das pneumatische Federungssystem durchführt, ober- und unterhalb einer normalerweise existierenden Nulllinie 51 stattfindet. Sobald bei einer nach oben gerichteten Auslenkung des Federungssystems eine Linie 52 erreicht wird, findet normalerweise das Abführen von Luft aus der Luftfeder statt, um gegen die Schwingungsbewegung in Richtung der Nulllinie 51 zu wirken. Ebenso findet bei einer Überschreitung einer Linie 53 das Zuführen von Luft statt, um entgegen der Schwingungsbewegung in Richtung der Nulllinie 51 zu wirken. Dies trifft für eine normal stattfindende Schwingung, also ohne Erreichen eines Hubendanschlages, zu.

Wird jedoch ein oberer Hubendanschlag 54 oder ein unterer Hubendanschlag 55 erreicht, wie es in dieser Darstellung für das Erreichen des unteren Hubendanschlages dargestellt ist, also wiederum eine Bewegung in Richtung des Pfeils 56 oder 57 stattfindet, so wird bei Erreichen des unteren Hubendanschlages 58 unmittelbar danach in dem Kurvenabschnitt 59 nicht Luft abgeführt wie es - wie zuvor beschrieben - normalerweise passiert, sondern Luft zugeführt. Dies führt dazu, dass die Nulllinie 51 sich anschließend anhebt bzw. verschiebt, wie es aus der Linie 60 hervorgeht.

Ein derartiges Zuführen von Luft anstelle des Abführens von Luft bei einer nach oben gerichteten Bewegung unmittelbar nach Erreichen des unteren Hubendanschlages und natürlich auch ein Abführen von Luft anstelle des Zuführens von Luft bei einer nach unten gerichteten Bewegung wird während einer vorbestimmbaren Zeitspanne 61 durchgeführt.

In dieser Darstellung sind ebenso erste und zweite Hubendbereiche 62 und 63 dargestellt.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Rückenlehne
- 2: Sitzteil
- 3: oberes Fahrzeugsitzteil
- 4: unteres Fahrzeugsitzteil
- 5, 6: Scherenarme
- 6a: rollenartiges Element
- 7: Dämpfer
- 8: Luftfeder
- 10: erste Regelungseinrichtung
- 11: Gehäuse
- 12: kolbenartiges Element
- 13: Doppelpfeil
- 13b: Pfeil
- 14, 15: Abdichtungselemente
- 16: Eingangsöffnung
- 16a: Luft
- 17: Ausgang
- 17a: Luft
- 18: Ein- und Ausgang
- 19: Leitung
- 20: zweite Regelungseinrichtung
- 20a: Betätigungselement
- 21: 2/2-Regelventil
- 22: Abluftleitung
- 23: Zahnstange
- 24: Doppelpfeil
- 24a: Pfeil
- 25: Feder
- 26: Honigmotor
- 27: Doppelpfeil
- 27a: Pfeil
- 30: dritte Regelungseinrichtung
- 30a: Betätigungselement
- 31: 2/2-Regelventil
- 32: Zuluftleitung
- 33: Zahnstange
- 34: Doppelpfeil
- 34a: Pfeil
- 35: Feder
- 36: Zahnrad
- 37: Doppelpfeil
- 37a: Pfeil
- 40: Ventil
- 41: Rückschlagventil
- 50: Schwingung
- 51: Nulllinie
- 52, 53: Linie
- 54: oberer Hubendanschlag
- 55, 58: unterer Hubendanschlag
- 56, 57: Pfeil
- 59: Kurvenabschnitt
- 60: Linie
- 61: vorbestimmbaren Zeitspanne
- 62, 63: erste und zweite Hubendbereiche

## Patentansprüche

1. Pneumatisches Federungssystem für Fahrzeuge mit mindestens einem ersten und einem zweiten Teil (3, 4), wobei beide Teile (3, 4) mittels mindestens einer Luftfeder (8) schwingungsbeweglich und pneumatisch federnd zueinander gelagert sind, wobei eine erste Regelungseinrichtung (10) zum Zu- und Abführen von Luft in und aus der Luftfeder (8) angeordnet ist, welche das Abführen von Luft durchführt, nachdem ein erster Hubendbereich (62) des Federungssystems, bei dem sich die Luftfeder (8) in einem gestauchten Zustand befindet, erreicht worden ist,
und welche das Zuführen von Luft durchführt, nachdem ein zweiter Hubendbereich (63) des Federungssystems, bei dem sich die Luftfeder (8) in einem auseinandergezogenen Zustand befindet, erreicht worden ist,
**gekennzeichnet durch**
eine zweite Regelegungseinrichtung (20) zum Zuführen von Luft in die Luftfeder (8) und zum Abschalten des Abführens von Luft aus der Luftfeder (8), während einer vorbestimmbaren ersten Zeitspanne (61), nachdem erstmalig ein erster Hubendanschlag (58) in dem ersten Hubendbereich (62) erreicht worden ist,
und/oder
eine dritte Regelungseinrichtung (30) zum Abführen von Luft aus der Luftfeder (8) und zum Abschalten des Zuführens von Luft in die Luftfeder (8) während einer vorbestimmbaren zweiten Zeitspanne, nach dem erstmalig ein zweiter Hubendanschlag in dem zweiten Hubendbereich (63) erreicht worden ist.

2. Federungssystem nach Anspruch 1,
**dadurch gekennzeichnet, dass**
die zweite Regelungseinrichtung (20) ein erstes Regelventil (21), vorzugsweise ein 2/2-Wege-Ventil aufweist, welches in einer Abluftleitung (22), welche die Luftfeder (8) mit der ersten Regelungseinrichtung (10) verbindet, zum Ein- und Abschalten des Abführens von Luft aus der Luftfeder (8) angeordnet ist.

3. Federungssystem nach einem der vorangegangenen Ansprüche,
**dadurch gekennzeichnet, dass**
die dritte Regelungseinrichtung (30) ein zweites Regelventil (31), vorzugsweise ein 2/2-Wege-Ventil aufweist, welches in einer Zuluftleitung (32), welche die Luftfeder (8) mit der ersten Regelungseinrichtung (10) verbindet, zum Ein- und Abschalten des Zuführens von Luft in die Luftfeder (8) angeordnet ist.

4. Federungssystem nach Anspruch 2 oder 3,
**dadurch gekennzeichnet, dass**
das zweite und das dritte Regelventil (20, 30) jeweils mittels mindestens einem beweglichen Element (23, 33), das durch eines der schwingungsbeweglichen Teile (3, 4, 5, 6, 6a) bewegbar ist, schaltbar ist.

5. Federungssystem nach Anspruch 4,
**dadurch gekennzeichnet, dass**
jedes bewegliches Element (23, 33) mit einem Bewegungsverzögerungsglied (26, 36) verbunden ist, um während der ersten bzw. der zweiten Zeitspanne (61) das bewegliche Element (23, 33) entgegen einer Federbeaufschlagungskraft verzögert in eine Ausgangsposition zurückzubewegen.

6. Federungssystem nach Anspruch 4 oder 5,
**dadurch gekennzeichnet, dass**
das bewegliche Element eine Zahnstange (23, 33) und das Bewegungsverzögerungsglied ein damit zusammenwirkendes mit einem vorbestimmbaren Drehmoment beaufschlagbares drehbares Zahnrad (26, 36) ist.

7. Federungssystem nach Anspruch 6,
**dadurch gekennzeichnet, dass**
das Drehmoment nur in eine erste Drehrichtung des Zahnrades (26, 36), bei der sich die Zahnstange (23, 33) von einer Auslenkposition in die Ausgangsposition bewegt, wirkt.

8. Federungssystem nach einem der vorangegangenen Ansprüche,
**dadurch gekennzeichnet, dass**
die erste Regelungseinrichtung (10) ab einer vorbestimmbaren Schwingungsfrequenz der schwingungsbeweglichen Teile (3, 4) das Abschalten des Abführens von Luft aus der Luftfeder (8) zu Beginn der ersten Zeitspanne (61) und das Abschalten des Zuführens von Luft in die Luftfeder (8) zu Beginn der zweiten Zeitspanne durchführt.

9. Federungssystem nach einem der vorangegangenen Ansprüche,
**dadurch gekennzeichnet, dass**
das erste Teil ein Fahrzeugsitzoberteil (3) und das zweite Teil ein Fahrzeugsitzunterteil (4) ist.

10. Verfahren zum pneumatischen Federn von Fahrzeugteilen mit mindestens einem ersten und einem zweiten Teil (3, 4), wobei beide Teile (3, 4) mittels mindestens einer Luftfeder (8) sich schwingend zueinander bewegen und pneumatisch federnd zueinander gelagert sind, wobei eine erste Regelungseinrichtung (10) Luft in und aus der Luftfeder (8) zu und abführt, welche das Abführen von Luft durchführt, nachdem ein erster Hubendbereich (62) des Federungssystems, bei dem sich die Luftfeder (8) in einem gestauchten Zustand befindet, erreicht worden ist, und welche das Zuführen von Luft durchführt, nachdem ein zweiter Hubendbereich (63) des Federungssystems, bei dem sich die Luftfeder (8) in einem auseinandergezogenenen Zustand befindet, erreicht worden ist,
**dadurch gekennzeichnet, dass**
mittels einer zweiten Regelungseinrichtung (20) Luft in die Luftfeder (8) zugeführt wird und das Abführen von Luft aus der Luftfeder (8) während einer vorbestimmbaren ersten Zeitspanne (61) abgeschaltet wird, nachdem erstmalig ein erster Hubendanschlag (58) in dem ersten Hubendbereich (62) erreicht worden ist,
und/oder
mittels einer dritten Regelungseinrichtung (30) während einer vorbestimmbaren zweiten Zeitspanne Luft aus der Luftfeder (8) abgeführt wird und das Zuführen von Luft in die Luftfeder (8) abgeschaltet wird, nachdem erstmalig ein zweiter Hubendanschlag in dem zweiten Hubendbereich (63) erreicht worden ist.

## Claims

1. Pneumatic suspension system for vehicles with at least a first and a second part (3, 4), wherein both parts (3, 4) are mounted so as to be movable in an oscillating manner and pneumatically suspended with respect to each other by means of at least one pneumatic spring (8), wherein a first control device (10) is arranged to supply air to and discharge air from the pneumatic spring, which carries out the discharge of air after a first stroke end zone (62) of the suspension system has been reached in which the pneumatic spring (8) is in a compressed state, and which carries out the supply of air after a second stroke end zone (63) of the suspension system has been reached in which the pneumatic spring (8) is in an extended state,
**characterized by**
a second control device (20) for supplying air to the pneumatic spring (8) and to disable the discharge of air from the pneumatic spring (8) during a pre-determinable first time interval (61) after a first stroke end stop (58) in the first stroke end zone (62) has been reached for the first time,
and/or
a third control device (30) for discharging air from the pneumatic spring (8) and to disable the supply of air to the pneumatic spring (8) during a pre-determinable second time interval after a second stroke end stop in the second stroke end zone (63) has been reached for the first time.

2. Suspension system according to claim 1,
**characterized in that**
the second control device (20) comprises a first control valve (21), preferably a 2/2 way valve, which is arranged in an air discharge line (22) connecting the pneumatic spring (8) with the first control device (10) to enable and disable the discharge of air from the pneumatic spring (8).

3. Suspension system according to any of the preceding claims,
**characterized in that**
the third control device (30) comprises a second control valve (31), preferably a 2/2 way valve, which is arranged in a supply air line (32) connecting the pneumatic spring (8) with the first control device (10) to enable and disable the supply of air to the pneumatic spring (8).

4. Suspension system according to claim 2 or 3,
**characterized in that**
the second and third control valve (20, 30) can each be switched by means of at least one movable element (23, 33), which can be moved by one of the parts (3, 4, 5, 6, 6a) which are mounted so as to be movable in an oscillating manner.

5. Suspension system according to claim 4,
**characterized in that**
each movable element (23, 33) is connected with a movement delay member (26, 36) in order, during the first or second time interval (61), to move the movable element (23, 33) back with a delay into a starting position against a spring application force.

6. Suspension system according to claim 4 or 5,
**characterized in that**
the movable element is a toothed rack (23, 33) and the movement delay member is a rotatable toothed wheel (26, 36) cooperating therewith and applyable with a pre-determinable torque.

7. Suspension system according to claim 6,
**characterized in that**
the torque acts only in a first rotation direction of the toothed wheel (26, 36), in which the toothed rack (23, 33) moves from a deflection position to the starting position.

8. Suspension system according to any of the preceding claims,
**characterized in that**
the first control device (10) from a pre-determinable vibration frequency of the parts (3, 4), which are mounted so as to be movable in an oscillating manner, disables the discharge of air from the pneumatic spring (8) at the start of the first time interval (61) and disables the supply of air to the pneumatic spring (8) at the start of the second time interval.

9. Suspension system according to any of the preceding claims,
**characterized in that**
the first part is an upper part of the vehicle seat (3) and the second part is a lower part of the vehicle seat (4).

10. Method for pneumatic suspension of vehicle sections with at least a first and a second part (3, 4), wherein both parts (3, 4) are mounted so as to be movable to one another in an oscillating manner und pneumatically suspended to one another by at least one pneumatic spring (8), wherein a first control device (10) supplies air to and discharges air from the pneumatic spring (8), which carries out the discharge of air after a first stroke end zone (62) of the suspension system has been reached in which the pneumatic spring (8) is in a compressed state, and which carries out the supply of air after a second stroke end zone (63) of the suspension system has been reached in which the pneumatic spring (8) is in an extended state,
**characterized in that**
by means of a second control device (20) air is supplied to the pneumatic spring (8) and the discharge of air from the pneumatic spring (8) is disabled during a pre-determinable first time interval (61) after a first stroke end stop (58) in the first stroke end zone (62) has been reached for the first time,
and/or
by means of a third control device (30) during a pre-determinable second time interval air is discharged from the pneumatic spring (8) and the supply of air to the pneumatic spring (8) is disabled after a second stroke end stop in the second stroke end zone (63) has been reached for the first time.

## Revendications

1. Système d'amortissement pneumatique pour des véhicules avec au moins une première et une deuxième partie (3, 4), les deux parties (3, 4) étant logées de manière vibrante et pneumatiquement amortie l'une par rapport à l'autre à l'aide d'au moins un ressort pneumatique (8), un premier dispositif de régulation (10) est prévu pour l'introduction et l'évacuation d'air dans et hors du ressort pneumatique (8), qui effectue l'évacuation de l'air après qu'une première zone de fin de course (62) du système d'amortissement, dans lequel le ressort pneumatique (8) se trouve dans un état comprimé, a été atteinte,
et qui effectue l'introduction d'air après qu'une deuxième zone de fin de course (63) du système d'amortissement, dans laquelle le ressort pneumatique (8) se trouve dans un état déployé, a été atteinte,
**caractérisé en ce qu'**
un deuxième dispositif de régulation (20) est prévu pour l'introduction d'air dans le ressort pneumatique (8) et pour l'arrêt de l'évacuation de l'air hors du ressort pneumatique (8), pendant une première période (61) prédéterminable, après qu'une première butée de fin de course (58) dans la première zone de fin de course (62) a été atteinte pour la première fois, et/ou
un troisième dispositif de régulation (30) est prévu pour l'évacuation de l'air hors du ressort pneumatique (8) et pour l'arrêt de l'introduction de l'air dans le ressort pneumatique (8) pendant une deuxième période prédéterminable, après qu'une deuxième butée de fin de course dans la deuxième zone de fin de course (63) a été atteinte pour la première fois.

2. Système d'amortissement selon la revendication 1,
**caractérisé en ce que**
le deuxième dispositif de régulation (20) comprend une première vanne de régulation (21), de préférence une vanne 2/2 voies qui se trouve dans une conduite d'évacuation d'air (22) reliant le ressort pneumatique (8) au premier dispositif de régulation (10), pour la mise en marche et l'arrêt de l'évacuation de l'air hors du ressort pneumatique (8).

3. Système d'amortissement selon l'une des revendications précédentes, **caractérisé en ce que**
le troisième dispositif de régulation (30) comprend une deuxième vanne de régulation (31), de préférence une vanne 2/2 voies, qui se trouve dans une conduite d'entrée d'air (32) reliant le ressort pneumatique (8) au premier dispositif de régulation (10), pour la mise en marche et l'arrêt de l'introduction d'air dans le ressort pneumatique (8).

4. Système d'amortissement selon la revendication 2 ou 3,
**caractérisé en ce que**
la deuxième et la troisième soupape de régulation (20, 30) peuvent être commandés chacune à l'aide d'au moins un élément mobile (23, 33) pouvant être déplacé à l'aide d'une des parties vibrantes (3, 4, 5, 6, 6a).

5. Système d'amortissement selon la revendication 4,
**caractérisé en ce que**
chaque élément mobile (23, 33) est relié à un organe de retardement de mouvement (26, 36) afin de faire revenir l'élément mobile (23, 33) de manière retardée dans une position de départ à l'encontre d'une force de compression de ressort pendant la première ou respectivement la deuxième période (61).

6. Système d'amortissement selon la revendication 4 ou 5,
**caractérisé en ce que**
l'élément mobile est une crémaillère (23, 33) et l'organe de retardement de mouvement est une roue dentée (26, 36) rotative qui interagit avec la crémaillère et à laquelle un couple prédéterminable peut être appliqué.

7. Système d'amortissement selon la revendication 6,
**caractérisé en ce que**
le couple agit uniquement dans un premier sens de rotation de la roue dentée (26, 36), dans lequel la crémaillère (23, 33) se déplace d'une position de déviation vers la position de départ.

8. Système d'amortissement selon l'une des revendications précédentes,
**caractérisé en ce que**
le premier dispositif de régulation (10) effectue, à partir d'une fréquence de vibration prédéterminable des parties vibrantes (3, 4), l'arrêt de l'évacuation de l'air hors du ressort pneumatique (8) au début de la première période (61) et l'arrêt de l'introduction d'air dans le ressort pneumatique (8) au début de la deuxième période.

9. Système d'amortissement selon l'une des revendications précédentes,
**caractérisé en ce que**
la première partie est une partie supérieure de siège de véhicule (3) et la deuxième partie est une partie inférieure de siège de véhicule (4).

10. Procédé d'amortissement pneumatique de parties de véhicules avec au moins une première et une deuxième partie (3, 4), les deux parties (3, 4) étant logées de manière vibrante et pneumatiquement amortie l'une par rapport à l'autre à l'aide d'au moins un ressort pneumatique (8), un premier dispositif de régulation (10) étant prévu pour l'introduction et l'évacuation d'air dans et hors du ressort pneumatique (8) qui effectue l'évacuation de l'air après qu'une première zone de fin de course (62) du système d'amortissement, dans lequel le ressort pneumatique (8) se trouve dans un état comprimé, a été atteinte, et qui effectue l'introduction d'air après qu'une deuxième zone de fin de course (63) du système d'amortissement, dans laquelle le ressort pneumatique (8) se trouve dans un état déployé, a été atteinte,
**caractérisé en ce que**
grâce à un deuxième dispositif de régulation (20), de l'air est introduit dans le ressort pneumatique (8) et l'évacuation de l'air hors du ressort pneumatique (8) est arrêté pendant une première période (61) prédéterminable, après qu'une première butée de fin de course (58) dans la première zone de fin de course (62) a été atteinte pour la première fois,
et/ou
grâce à un troisième dispositif de régulation (30), l'air est évacué hors du ressort pneumatique (8) pendant une deuxième période prédéterminable et l'introduction d'air dans le ressort pneumatique (8) est arrêtée après qu'une deuxième butée de fin de course dans la deuxième zone de fin de course (63) a été atteinte pour la première fois.
